# EUROPEAN PATENT APPLICATION

(11) **EP 1 640 650 A1**
(43) Date of publication of application: **29.03.2006**
(21) Application number: 04736061.5
(22) Date of filing: 04.06.2004
(51) Int. Cl.: F16K 31/24, F16K 31/34, E03D 1/32

(54) **IMPROVED FAUCET FOR FILLING CISTERNS**

(30) Priority: 04.06.2003 ES 200301326 P; 06.04.2004 ES 200400850 P
(71) Applicant: Fominaya, S.A., 46117 Betera (ES)
(72) Inventor: GONZALES SALMER N, Mercedes, E-46120 Alboraya (ES); FOMINAYA GONZALEZ, Mercedes, E-46120 Alboraya (ES)
(74) Representative: Ungria Lopez, Javier
(86) International application number: PCT/ES2004/000259
(87) International publication number: WO 2004/109169

(57) **Abstract**

The invention relates to a faucet having a closing device that includes an initial structure such as the one disclosed in patent 200002418, albeit with important improvements. These improvements are fundamentally based on the inclusion of a new rigid part (24) that replaces the back rubber included in said patent, thereby providing better operation of the device and smooth final damping in the filling of the cistern. The improvements also include a lever system forming an articulated parallelogram basically consisting of a tilting arm (7) hinging in the structure of the faucet, a top connecting rod (15) and a secondary lever (16) associated with said connecting rod (15), said lever acting directly upon the piston (2). This lever structure prevents deviations and lateral torsions. Another characteristic of the invention is the inclusion of a device preventing the water of the cistern from returning to the water network when a depression or aspiration occurs as a result of interruption in the supply of water or any other unjustified anomaly.

## Description

The invention relates to an improved faucet for the filling of cisterns. These improvements are focused on a new device and structure of float, along with certain developments in the shuttoff valves, specifically with regard to the closing system, the structure of which is appreciably simplified, thereby reducing costs, at the same time as facilitating the assembly, with better and more precise functioning.

The improvements are also focused on a lever system which associates the float with the closing device initially consisting of the axial actuation piston which emerges via an end section to the outside for actuation via one of the parts of said lever system.

Other improvements of the invention are directed towards avoiding part of the water contained in the tank from returning to the water network feeding said cistern due to any interruption or malfunctioning in the water supply, said returns or backflows being produced specifically by unwanted depressions or aspirations which are in turn caused by said malfunctioning or interruption in the supply.

It is particularly applicable to WC cisterns where chemicals are sometimes used for treating the water, such that with the improvements of the invention said products are prevented from accidentally passing into the water supply network with the consequent hazard that this could imply for health.

Nevertheless, the improvements of the invention are also evidently applicable to wc cisterns whose water does not contain those chemicals, since, apart from the fact that the water would surely also not be very healthy to drink, the improvements of the invention are also going to prevent noises and in general any occasional malfunctioning of the faucets for filling the cistern, precisely when depressions or asipirations take place.

### PRIOR ART OF THE INVENTION

The water empties into the cistern and the closing is achieved by means of the pressure effect exerted by the water network itself on the sealing rubber. To achieve this, the closure is instantaneous and rapid, with which the progressive closure which produces noise is avoided.

It can be asserted that, to date, this type of faucet has displayed important technical problems, especially due to the fact that they only function at very specific pressures, in such a way that when the values are high, these faucets become blocked and unusable extremely easily.

Others, which work with micrometric measures for the passage of water, also very easily become blocked and, of course, cease to work.

On the other hand, present-day fast closing faucets for the filling of cisterns do not function with high water pressure.

Some faucets are known which seem to function acceptably well apart from the problems in the preceding paragraphs, though they are very large and expensive to produce and their functioning becomes irregular at high pressures.

Among the prior art having some of the drawbacks mentioned above can be mentioned Invention Patent No. 9001516, Utility Model No. 244814, Utility Model No. 246739, etc.

As prior art of the feed faucet for cisterns which uses a vertical pipe for leading the water to the bottom of the cistern and eliminating noises mention can be made of: Utility Model No. 271378, though it uses a mechanical closing system by means of thrust from an arm associated with the float.

Invention Patent No. 9400045 refers to a faucet for filling of cisterns possessing a rapid and silent closing during the filling of the cistern of a WC, functioning with both high and low pressures. This is a dual functioning faucet; on the one hand it acts like a fast and silent closing faucet, exploiting the actual pressure of the water in the network for the closing, and on the other hand, in the absence of pressure, it functions as an ordinary faucet, in other words, by the thrust which the rise in the level of water exerts on the arm of the float.

Invention Patent 200002418 is basically an improvement in relation to Invention Patent No. 9400045, cited earlier.

That new patent consists of a faucet which in general possesses a structural and functional base like the faucet of the older patent No. 9400045, but with the incorporation of various improvements and new devices implying a more efficient functioning if possible in all senses, primarily with regard to the advantage of functioning correctly under any pressure of the water network supplying said faucet, and with regard to noise reduction.

As occurs with the faucet of Invention Patent No. 9400045 above, the faucet of Patent No. 200002418 can function as a normal faucet, in other words, closing by means of the thrust of the rubber when the float rises up, in the absence of pressure in the water supply.

On the other hand, as with other devices of this type, Patent No. 200002418 has a lever system which transfers or converts the rising movement of the float into a pressure exerted normally on an element which acts on the detection system of the filling of the cistern. These levers have to ensure a suitable multiplying of the force which the floatability of the float exerts on them in order to favour the proper actuation of the closing elements, along with the travel of the different elements.

Moreover, when the cistern reaches the intended level of liquid, the closure of the filling faucet takes place and when that cistern is emptied, it fills up again and so on successively.

Along the lines of that stated in the previous paragraph, it sometimes occurs that when an anomaly is produced in the water supply, such as for example due to an interruption in that supply, such an anomaly is reflected in a depression or aspiration which can produce a backflow or return of the water from the cistern or from the inside of the faucet to the supply network, with the consequent hazard for health.

In addition, this hazard can be increased in cases in which the cistern water is treated with a chemical.

The backflow could also produce noises.

### DESCRIPTION OF THE INVENTION

In order to correct the problems and drawbacks mentioned in the above sections, the improvements of the invention are focused on a set of levers and a float associated with the system, in such a way that via the float and its rising and falling on account of the level of water in the cistern, the closing device, which is the same as that of Invention Patent 200002418, is acted upon.

The improvements are also directed towards preventing backflows or returns of the water from the cistern to the supply network.

The actuation on the closing and opening device is done in a horizontal direction and not vertical as occurs in invention patent 200002418.

To achieve this, the closing device, which is known, includes among its parts an actuation piston, which possesses an end section which projects to the outside, in such a way that by means of this end section the actuation piston is associated with the lever system.

The new lever system is defined on the basis of a main arm which in principle possesses two symmetric branches, via one of which ends they converge in a raised termination where a vertical shaft is linked to the float.

On the other hand, the opposite ends of these two symmetric branches converge in a curved bridge, also raised, which is a continuation of certain intermediate arched sections which end in that curved bridge.

The arm is coupled to the structure of the faucet at fixed articulated points facing each other and located in the arched section of the main arm.

In the arched bridge of the main arm there in turn exists another mobile articulated point where a piece is coupled at one end by way of a connecting rod arranged above the casing of the faucet which envelopes the closing device.

This piece by way of a connecting rod is, via a short shaft, linked and associated by its other end with the groove of a secondary lever, such that the free end of this lever is linked to a fixed point of the faucet, while said lever is connected to the thrust piston of the closing device via an intermediate zone. This connection is normally carried out by means of a short shaft which has freedom to move in a groove of the said piston, though this connection could simply be by means of thrust on the outside free end of the said piston.

With the simple arrangement described, when the level of the water rises inside the cistern, the float moves upwards causing the main arm to tilt which in its movement will drag on the piece acting as a connecting rod, this to the secondary lever and the latter in turn will axially push the piston until closure is achieved of the closing device.

This float is coupled and in principle guided on a vertical outlet pipe for the water as occurs in invention patent 200002418.

Nevertheless, the float of the invention that we are concerned with presents a different structure, and with the coupling and positions occupied by the float also being different. This comprises a broad vertical channel in which the outlet pipe fits, which is in turn closed by means of a lower narrow cross-member permitting the float to tilt.

So, while in invention patent 200002418 the different positions occupied by the float owing to the variations in the level of water in the cistern are achieved by means of a vertical displacement of the float, in the case of the invention that we are concerned with this displacement is a combination of a tilting movement and also a vertical movement

Moreover, the structure of the float, as well as its clearance in coupling on the outlet pipe, ensures a total absence of blocking.

One advantage that can be highlighted is that the new lever system permits adaptation to new designs of cistern, in which there is very little space between the lateral opening for fitting the faucet and the upper part thereof where the lid fits.

Other improvements in the invention are focused on the closing device which presents a more simplified and efficient structure in relation to Patent 200002418 and also in relation to the older Invention Patent No. 9400045.

In principle, these closing devices incorporate among their elements two "front and back" facing sealing rubbers such that once the cistern has been filled to a predetermined height, the pressure of the water pushes on the rubbers in opposite directions within an intermediate space existing between them both, so that, thanks to that pressure, the front rubber is in charge of closing and interrupting the supply to the cistern. To do this, the front rubber exerts an external pressure on an annular seating established in the interior housing of a casing where the parts of the closing device are to be found.

So, starting from this premise, the novelty in the closing device is to be found in a rigid part which is located in substitution of the back rubber, in such a way that, although the new part also possesses a central opening, this opening is substantially narrower, and is at the same time established in a conical portion pointing outwards.

The opening ends in an annular termination or appendage corresponding to the vertex of that conical portion.

Another characteristic of the closing device is that the annular termination is directly facing the thrust piston without the mediation of any intermediate part as occurs in the two priority Invention Patents cited earlier.

The piston is associated with the float in a way that is known, such that once the predetermined level of water has been reached in the cistern, the supply is interrupted by means of the closing device, and more specifically by means of the front rubber by forcefully resting on the annular seating found within the internal housing where the parts of the device are located.

Nevertheless, when the predetermined water level is reached, a small flow of water continue to enter into the intermediate space existing between the front joint or rubber and the rigid part, and this water passes through the narrowing opening of the front rubber wherein a fixed rod is loosely fitted, which was also provided for in invention patent 200002418 as occurs with the narrow central opening of the front joint.

A small part of the water housed inside the intermediate space will escape towards the outside creating a small leak that will run through the narrow central opening in correspondence with the annular appendage of the rigid part, since at this moment the thrust of the float is not sufficient for closing it completely. So, this leak is expelled to the outside in the form of a small stream of liquid which will fill up the cistern during an additional time until the float totally blocks the opening of the rigid part, at which moment, and once the pressures between the water inlet and the intermediate space have become equalised, the water will cease to enter through that opening in the front rubber joint.

In the earlier patents, this additional thrust from the float was achieved by means of the axial expansion of the rubber which pushed the piston enough to slightly sink the float.

This instantaneous and total closure can in certain installations produce a kind of water hammer which is very annoying since it is usually accompanied by vibration and noise.

In short, with the new rigid part we successfully carry out a first main closure, once approximately 90% of the volume of the filling water has been achieved, minimising the said water hammer, and then obtaining complete closure thanks to the small leak that is provoked which constitutes an important and smooth means of final damping in the filling of the cistern, practically annulling that water hammer, thus achieving a silent filling of the cistern without any reduction whatsoever in the speed of filling of that cistern.

On the other hand, even without producing total filling and therefore complete closure, the cistern is perfectly operational, since its volume exceeds 90% of the discharge liquid.

The improvements for avoiding backflows or returns of water are characterised in that they comprise a simple device which is activated when any kind of aspiration or depression takes place from the water network blocking the inlet passages.

This device is located in a tubular section of an inlet pipe for the liquid which is going to end up in the filling faucet, in other words, it is located in a zone prior to the said faucet for filling the cistern.

The device basically comprises a mobile closing element facing the outlet of a water passage element located inside the inlet pipe in such a way that when the current of water flows normally through the interior of the inlet pipe towards the cistern, the actual current of water displaces the closing element forwards releasing the said outlet of a water passage element located inside the inlet pipe, with the liquid then reaching the cistern via the faucet which, once full, is closed by the action of a float associated with said faucet.

When undue aspiration or depression occurs, this anomaly instantaneously displaces the closing element until contact is made with the outlet of the passage element preventing the flow of water from returning to the supply network.

When the anomaly ceases, the closing element will separate from the outlet of the passage element.

In one embodiment, the device can include an independent cartridge embedded in the water inlet pipe, and at the same time it will include a support or passage element and a closing element.

In particular, the improvements of the invention can also be applied to invention patent number 200002418, either by means of the embodiment referred to in the previous paragraph or by means of coupling the closing element on a small rod fixed on a central piece provided at the end of the inlet pipe, this rod being arranged coaxially with said inlet.

This central piece includes passing holes, and it will also be facing the closing element in order to prevent the backflow of water.

A final section of that rod is housed in a small hole of a front rubber forming part of the filling faucet structure of the patent referred to above.

Moreover, in a section of the inlet pipe for the water, a small filter has been embedded which has the function of preventing the entrance of foreign bodies and of creating a reduction in the flow which can sometimes exceed the maximum permitted by this type of faucet.

Below, in order to facilitate a better understanding of this specification and forming an integral part thereof, some figures are attached in which, by way of illustration rather than being limiting, the object of the invention has been represented.

### BRIEF DESCRIPTION OF THE DRAWINGS

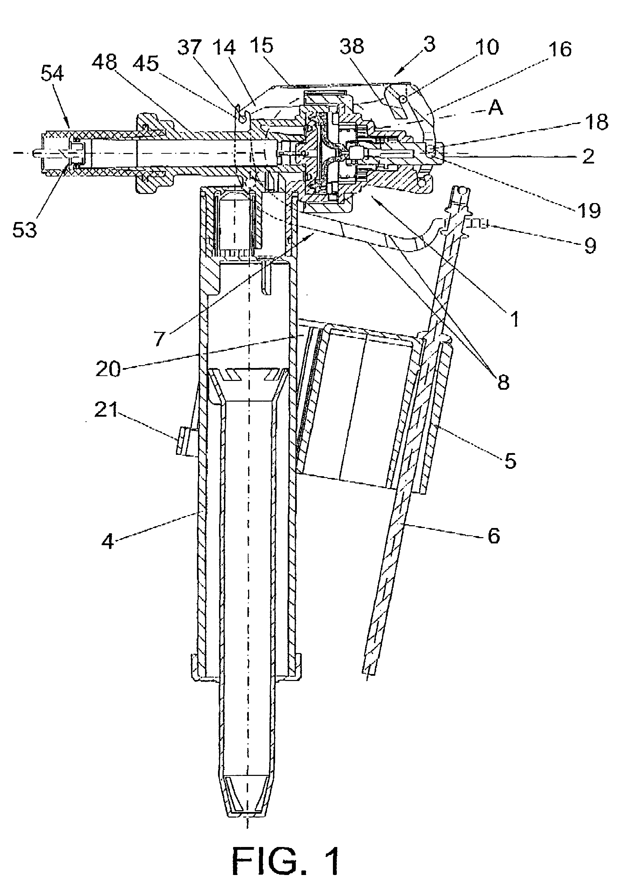

**Figure 1.**- Shows a sectioned elevation view of an improved faucet for filling cisterns, forming the object of the invention. The improvements are focused first of all on a new lever system for actuation of the closing device for the faucet, this lever system in turn being associated with the structure of the float linked to the lever system by means of a vertical shaft. The improvements also concern the closing device. Other improvements are focused on a device that prevents backflows or returns of water from the cistern to the water supply network.

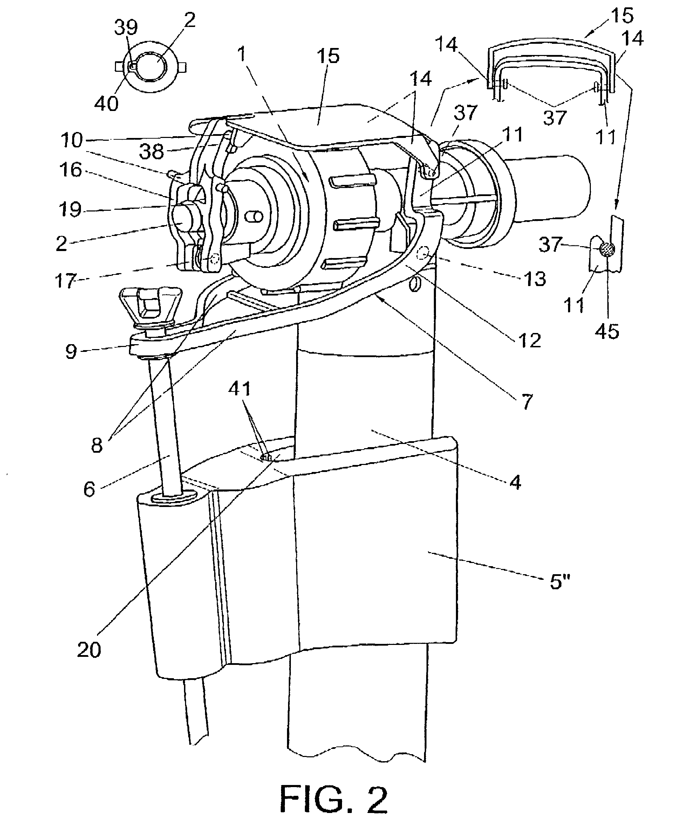

**Figure 2.**- Shows a perspective view essentially showing the lever system associated with the float and the closing device.

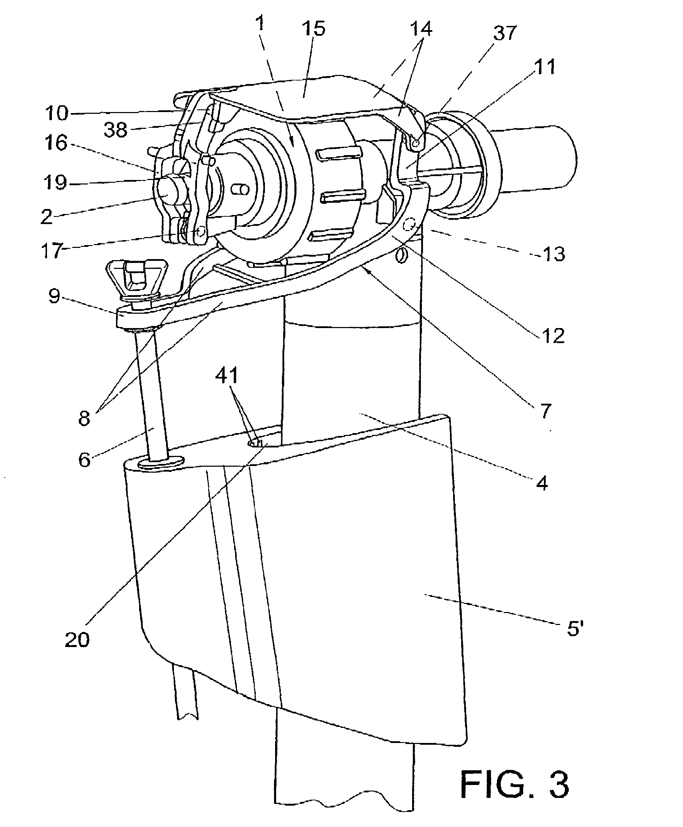

**Figure 3.**- Shows a similar view to the above with some variations in the lever system.

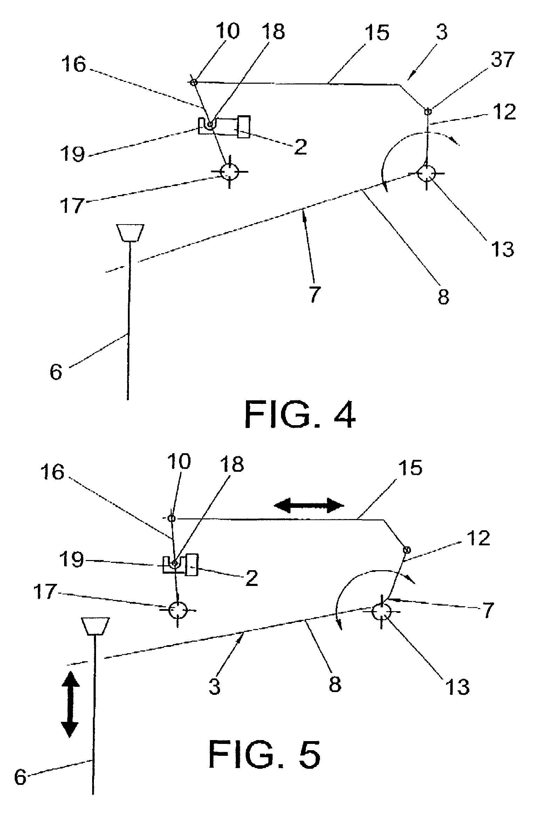

**Figures 4 and 5.**- Show schematic views of the closed and open positions of the faucet where the lever system adopts different positions, as does the float.

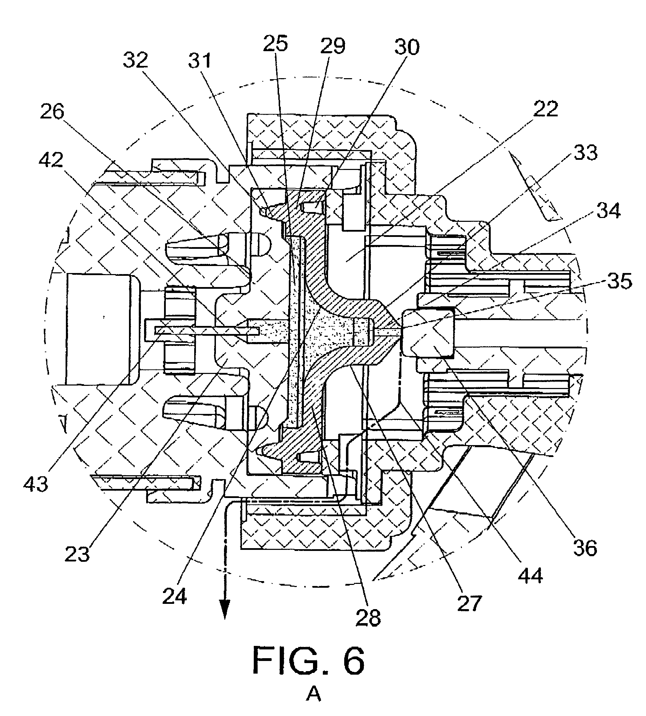

**Figure 6.**- Shows a detail view of the closing device.
**Figures 7 and 8.**- Show the improvements of the invention related to two devices for preventing backflows of water.

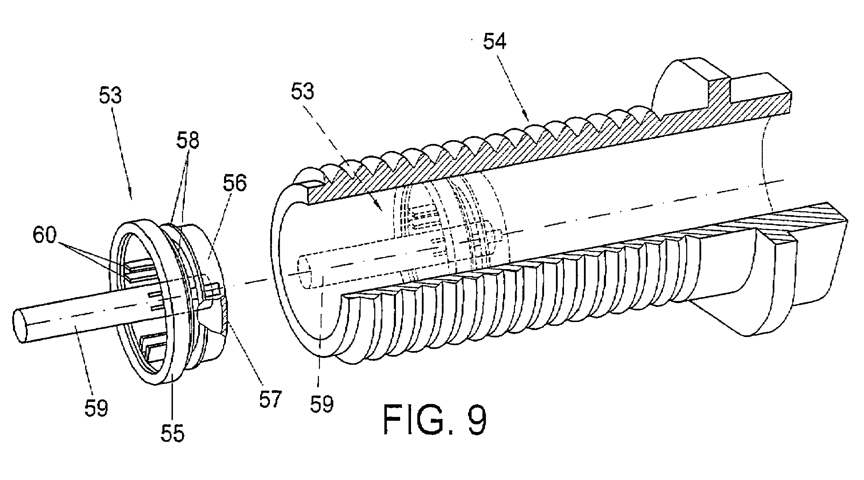

**Figure 9**.- Shows a view of a threaded pin through which water enters, within which a filter is embedded.

### DESCRIPTION OF THE PREFERRED FORM OF EMBODIMENT

Described below is an example of embodiment of the invention bearing in mind the numbering adopted in the figures.

The faucet for filling cisterns in principle comprises a closing device 1 which includes an exterior actuation piston 2 in a horizontal direction by means of a lever system 3 which constitutes one of the improvements of the invention.

In turn, the faucet assembly also incorporates a vertical pipe 4 for the water outlet, along with an associated float 5, 5', 5' ' guided in said vertical pipe 4. This float presents a new structure, and is in turn associated with the lever system 3 by means of a vertical shaft 6, such that the level of water in the cistern provides the opening or closing of the faucet by means of the respective float, vertical shaft 6 and lever system 3 which acts on the faucet.

The lever system 3 is defined on the basis of a main tilting arm 7 which in principle includes two symmetric branches 8, via one of which ends they converge in a narrow termination raised in the form of a "U" 9 where the upper section of the vertical shaft 6, linked to the float 5, 5', 5", is loosely connected.

The opposite ends of the those two symmetric branches 8 converge in an upper bridge 11 by means of some intermediate arched sections 12 which end at that upper bridge 11.

This new main arm 7 is associated in an articulated fashion on both sides of the structure of the faucet at two facing fixed articulated points 13 located precisely in the arched sections 12 of the main arm 7.

Connected to the side branches of the upper bridge 11 are two facing lugs 37 integral with separate end fins 14 forming part of a connecting rod 15, whose other opposite end is associated, via a mobile articulated shaft 16, with a groove 38 of a secondary lever 16, in such a way that the free end of the latter is linked to a fixed point 17 of the structure of the faucet. That mobile articulated shaft 10 constitutes the cross-member of a "U"-shaped structure integral with the connecting rod 15. The facing lugs 37 in turn, by means of an elastic displacement, fit into some complementary open holes 45 established in the branches of that upper bridge 11 forming part of the main arm 7.

This secondary lever 16 is linked to the piston 2 of the closing device 1 via an intermediary zone by means of a transverse shaft 18 which has freedom to move in a groove 19 of a section of that piston 2 which projects to the outside, said piston 2 furthermore incorporating a radial rib 39 which is complemented with a complementary notch 40 in order to prevent rotation of said piston 2.

So, the two connection end points of the connecting rod 15 constitute mobile linkages, as occurs with the linkage of the secondary lever 16 with respect to the piston 2, thus avoiding any blockage of the lever system 3.

The float 5, 5', 5' ' incorporates an open channel 20 for guiding and coupling to the vertical pipe 4, and at the same time it also incorporates a cross-member 21 which closes that channel 20 from below in order to ensure linkage of the float in the outlet pipe preventing its separation or exit and also in order to prevent blockages. That channel 20 in turn incorporates some narrow longitudinal rubs 41 which make contact with the vertical pipe 4 in order to prevent blockages.

The float presents at least three different embodiments.

In a first embodiment, it is a normal float 5 like that of patent 200002418 where its upper and lower bases are formed from two straight parallel planes.

In a second embodiment of the float 5', the lower base presents an inclined plane for compensating the inclination it adopts during the rest phase. In this case the floatability is better since its flotation line remains horizontal and we gain floatation volume.

In a third embodiment, 5" , both the lower and the upper base present inclined planes, in such a way that thanks to the inclination of the upper base we avoid undue contacts of the float with any mobile elements of the faucet assembly, keeping the flotation line horizontal and gaining floatation volume.

The new arrangement and structure of the lever system 3 permits the point of thrust of the piston 2 to be located in the same vertical plane as the closing mechanism materialised in the first place by the piston 2. In this way, fewer deviations and lateral twisting will take place.

The main arm 7 provides a maximum lever which magnifies the thrusting force of the float very considerably, which in the end will be transmitted to the piston of the closing device 1 and we ensure that the entire lever system will help in the closing and opening movement of that piston 2 with absolute security, contributing notably towards connecting the functioning of the filling faucet.

Also, with this system, at no time does any deviation take place in the vertical plane of the force defined by the connection point of the vertical shaft with the main arm and the axial displacement of the piston, thus achieving optimum power transmission.

It is important that the guided float should have the guided channel open at one of its end, so that a tolerance is defined in its displacement for the guide pipe, which ensures the absence of blockages, with there being means for preventing the complete exit of that guide pipe.

Other improvements are focused on the closing device 1 being located in an interior housing 22 of the faucet, in such a way that instead of including two facing elastic rubbers associated with each other as occurs in Invention Patent 200002418 and Invention Patent 9400045, the new closing device includes a front rubber or joint 23 and a rigid part 24 in replacement of the other rear rubber pair.

The inclusion of this new part 24 provides a more correct and precise functioning.

So, the pressure of the water existing within the internal housing 22 of the faucet, and more specifically in the intermediate space 25 limited by the elastic rubber 23 and rigid part 24, will produce a deformation of the rubber 23 which will be responsible for interrupting the filling of the cistern by pressing against the annular seating 26 established inside that housing 22.

Moreover, the rigid part 24 presents a particular structure comprising a central cylindrical-tubular portion 27 which projects from a flat circular extension 28 which in turn possesses a perimetric thickening 29 whose external face contains an annular ring 30, while the internal face includes an annular projection 31 which fits in a complementary recess 32 of the rubber 23. The central portion 27 is joined to the flat extension 28 in a broadly rounded way.

In addition, the free edge of the cylindrical-tubular portion 27 is joined to a conical portion 33 with a narrow longitudinal opening 34 which communicates with the outside via the vertex of that conical portion 33 where there exists a termination or annular appendage 25 directly facing the piston 2 and not via an intermediate body as occurred in the two previous Invention Patents.

In its front zone facing and in contact with the annular termination 35, the piston 2 incorporates an embedded elastic body 36 as also occurred in the two previous Invention Patents, in such a way that as the cistern fills up, the piston 2 approaches the rigid part 24 until its annular termination 35 makes contact with the piston 2, with which the pressure in the intermediate space 25 limited by the rigid part 24 and deformable rubber 23 increases, at the same time as the circulation of water via the narrow opening 34 of the rigid part 24 and also via the zone of the annular seating 26 of the elastic rubber 23 becomes interrupted, in such a way that once the cistern has filled up to the intended level, the circulation of water inside the faucet is wholly interrupted, at which moment the rubber 23 will be resting with maximum force on the annular seating 26 producing complete blocking owing to the pressure of the liquid.

Nevertheless, at the moment of reaching the intended level of water in the cistern, a minimum flow of water continues to enter into the intermediate space 25 via the narrow opening 42 of the forward joint 23 where a fixed rod 43 is to be found loosely fitting, as already provided for in Invention Patent 200002418 as occurs with the narrow opening 42 of that forward joint 23.

A small part of the water housed inside the intermediate space 25 will escape outwards with a small leak being produced that will run through the narrow central opening 34 in correspondence with the annular appendage 35 of the rigid part 24, since at that moment the thrust of the float is not sufficient for blocking it completely. So, this leak is expelled to the outside in the form of a small stream of liquid 44, which will fill up the cistern during an additional period of time until the float fully blocks the longitudinal opening 34 of the rigid part 24, at which moment, and once the pressures between the inlet or water and the intermediate space 25 have become equalised, the water will cease to enter through that opening 42 in the rubber joint 23.

In short, with the new rigid part 24 we successfully carry out a first main closure, once approximately 90% of the volume of the filling water has been achieved, thus minimising the water hammer, and then obtaining complete closure thanks to the small leak that is provoked which constitutes an important and smooth means of final damping in the filling of the cistern.

Other improvements of the invention concern a device for avoiding backflows of water from the cistern and filling faucet towards the supply network for that water and in principle it comprises a closing element 46, 46' close to and facing a water passage element 47, 47' embedded within a feed pipe 48 which empties into the filling faucet for the cistern 49, in such a way that when the cistern 49 is full, the closing element 46, 46' is normally separate from the water passage element 47, 47' in an advanced position.

When a depression or aspiration occurs, that blocking element 46, 46' will be frontally resting against the passage element 47, 47' preventing the return of water to the supply network.

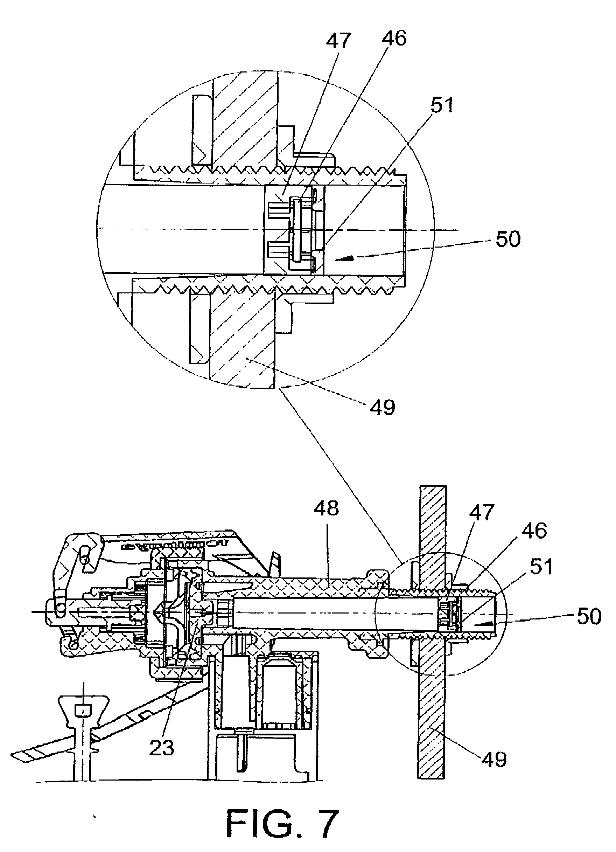

Figure 7 shows a first embodiment of the device for preventing the backflow of water and comprises an independent cartridge 50 embedded in the interior of an initial zone of contact 48, in such a way that said cartridge 50 includes a casing constituting the actual passage element itself 47, inside which is housed a closing element 46 facing an annular projection 51 where the closing element 46 will be seated in order to seal the passage and prevent backflows of water. That annular projection 51 forms an integral part of the passage element 47.

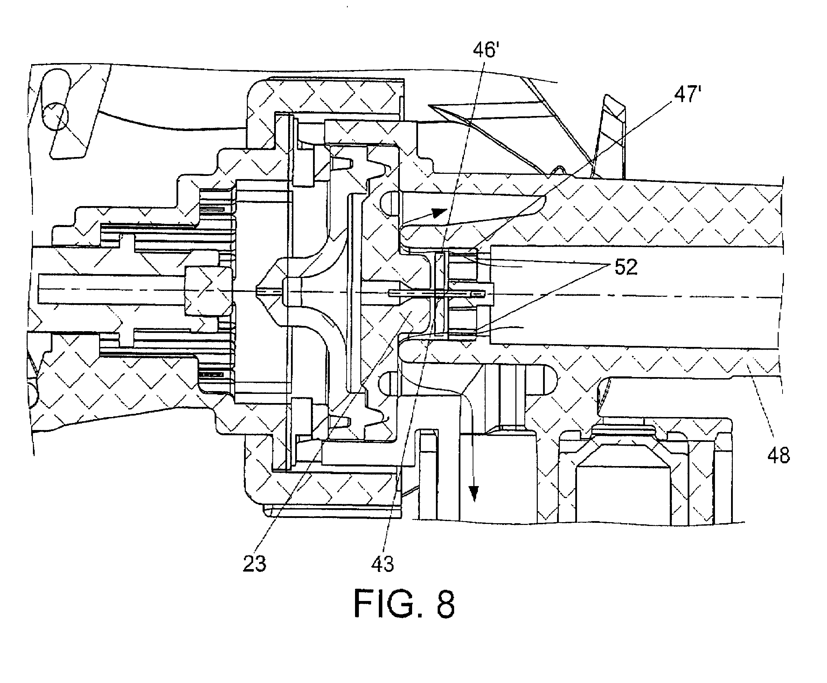

Figure 8 shows another particular embodiment where the passage element 47' is located in an end zone of the inlet pipe 48, at the same time as being defined by a central piece with various holes 52 forming part of the faucet. Fixed in that central piece 47' is the coaxial rod 43, whose free end section fits loosely within an axial hole of the forward rubber 23 which also forms part of the filling faucet assembly.

It is in this rod 43 where the closing element 46' is coupled and guided, which is facing precisely the hole 52 of that central piece 47' in such a way that when the anomaly of depression or aspiration takes place, the closing element 46' will then back on to that central piece 47' preventing the backflow of water by covering those holes 52 of the central piece 47'.

The closing element 46' in this second embodiment presents a configuration in the form of a washer, in such a way that its diameter is the minimum for covering those holes 52, without shutting off the circular passage existing between that part 46' and the inlet pipe 48.

Moreover, provision has been made for the incorporation of a small filter (53) essentially fitting within a rounded pin (54) forming part of the feed pipe (48). This filter (53) has the task of preventing the entrance of foreign bodies and generating a reduction in the flow which can sometimes exceed the maximum permitted by this type of faucet.

The filter (53) comprises a short initial portion (55) of greater diameter whereby it is embedded in the pin (54), a main portion (56) with a cylindrical surface grooved in the direction of its generatrices and a closed bottom (57) which is forced to project into the liquid by the grooved cylindrical surface (56), which externally incorporates two annular ribs (58). Projecting from this bottom is a central shaft (59) for manipulating the filter unit (53).

The grooved cylindrical surface (56) presents in its interior some transverse partitions (60) located on each side of the grooves so that foreign bodies (stones, pieces of lime, etc.) do not block those grooves and cause the filter to become blocked. This filter (53) runs up and rests against an annular seating made inside the threaded pin (54),

## Claims

1. **IMPROVED FAUCET FOR FILLING CISTERNS,** which, the faucet incorporating a closing device with a thrust piston for acting on said closing device by means of a float guided in a vertical pipe for the outlet of liquid and the float being associated in turn with a thrust mechanism on that piston, by means of a vertical shaft associated with the float; is **characterised in that** the closing device (1) located in an interior housing (22) of the faucet comprises two bodies facing and associated with each other via their inner faces: a conventional elastic rubber (23) externally facing an annular seating (26) and a rigid part (24) which includes at least one narrow longitudinal centred opening (34) which ends in an external annular appendage (35) directly facing an elastic body (36) embedded in the thrust piston (2); all this so that during the closing the annular appendage (35) makes contact with the elastic body (36) of the piston (2) by displacement of the latter, while the elastic rubber (23) will be deformed owing to the pressure of the liquid until it rests on the annular seating (26) sealing off the passage of liquid.

2. **IMPROVED FAUCET FOR FILLING CISTERNS,** according to the previous claim, **characterised in that** the rigid part (24) associated with the elastic rubber (23) includes a cylindrical-tubular portion (27), one of whose ends is extended in a conical portion (13) which ends in the tubular appendage (35) to where the longitudinal opening (34) leads, while the other end of the cylindrical-tubular body (27) is joined in a rounded way to the flat annular extension (28) which includes a perimetric thickening (29) whose external face contains an annular ring (30), while its internal face includes an annular projection (31) complementary with a recess (32) established on the inner face of the elastic rubber (23).

3. **IMPROVED FAUCET FOR FILLING CISTERNS,** according to either of the previous claims, **characterised in that** the thrust mechanism consists of a lever system defined by:
- a lower tilting arm (7) coupled in an articulated fashion by two intermediate and facing fixed points (13), in lateral zones of the structure of the faucet assembly;
- an upper connecting rod part (15) coupled in an articulated fashion via one end to the arm (7), while the other end is coupled, also in an articulated fashion, with a secondary lever (16), whose free end is linked in a lower fixed point (17) of the structure of the faucet, this lever (16) being associated with the piston (2) by an intermediate zone;
all this so that when the water level rises, the float acts on the tilting arm by the mediation of the vertical shaft (6) associated with the free end of that arm (7), its movement being transmitted to the secondary lever (16) which will axially displace the piston (2).

4. **IMPROVED FAUCET FOR FILLING CISTERNS**, according to claim 3, **characterised in that** the tilting arm comprises two symmetric branches (8), via one of which ends they converge in a termination raised up in the form of a "U" (9) where the vertical shaft (6) connects, while the opposite ends of those symmetric branches (8) converge at an upper point (11) where the connecting rod (15) is linked in a articulated fashion.

5. **IMPROVED FAUCET FOR FILLING CISTERNS,** according to claim 4, **characterised in that** the symmetric branches (8) of the tilting arm (7) include arched intermediate sections (12) which end in the upper bridge (11), at the same time as the tilting arm (7) is associated in an articulated fashion with the structure of the faucet via those arched sections (12).

6. **IMPROVED FAUCET FOR FILLING CISTERNS**, according to claim 4, **characterised in that** the linkage of the connecting rod (15) with the arm (7) is a mobile articulated connection comprising facing lugs (37) which by means of an elastic displacement fit into complementary open holes (45) established in the branches of the upper bridge (11) of the tilting arm (7), said facing lugs (37) being integral with two lateral fins (14) forming part of the connecting rod (15).

7. **IMPROVED FAUCET FOR FILLING CISTERNS**, according to claim 3, **characterised in that** the linkage of the connecting rod (15) with the secondary lever (16) is a mobile articulated connection consisting of a short shaft (10) which fits and is guided in a groove (38) of the said lever (16), said shaft (10) constituting the cross-member of an end structure in the form of a "U" integral with the connecting rod (15).

8. **IMPROVED FAUCET FOR FILLING CISTERNS,** according to claim 3, **characterised in that** the linkage of the secondary lever (16) with the piston (2) is a mobile connection consisting of a transverse shaft (18) which has freedom to move in a groove (19) of the piston (2), said shaft (18) constituting part of the lever (16).

9. **IMPROVED FAUCET FOR FILLING CISTERNS,** according to claim 3, **characterised in that** the piston (2) includes at least one radial rib (39) which fits in a complementary notch (40); all this in order to prevent rotations of that piston (2).

10. **IMPROVED FAUCET FOR FILLING CISTERNS,** according to any of the previous claims, **characterised in that** the lower base of the float (5') presents an inclined plane.

11. **IMPROVED FAUCET FOR FILLING CISTERNS**, according to any of claims 1 to 9, **characterised in that** the upper and lower bases of the float (5' ') present each inclined planes.

12. **IMPROVED FAUCET FOR FILLING CISTERNS**, according to any of the previous claims, **characterised in that** the float possesses an open channel (20) where the vertical outlet pipe (4) is housed, at the same time as said channel is enclosed by a narrow lower cross-member, all this in order to permit the tilting and vertical displacement of the float during variations in the level of the water.

13. **IMPROVED FAUCET FOR FILLING CISTERNS,** according to claim 1, **characterised in that** it includes a device incorporated into the inlet pipe for the water (48) in order to prevent returns or backflows of water from the cistern (49) towards the water network, when an anomalous depression or aspiration is produced, said device including a closing element close to and facing a passage element for the liquid fitted against the internal face of the inlet pipe (48); all this so that when the undue depression or aspiration is produced the closing piece will frontally rest against the passage element in order to prevent the backflow of the liquid.

14. **IMPROVED FAUCET FOR FILLING CISTERNS**, according to claim 13, **characterised in that** the device comprises an independent cartridge (50) embedded inside the inlet pipe (48), at the same time as said cartridge includes a small casing constituting the actual passage element itself (47) inside of which is housed the closing element (46) facing an annular projection (51) integral with the casing (47), which projection constitutes a seating opening of the closing element (46) when the aspiration or depression is produced in order to prevent backflow.

15. **IMPROVED FAUCET FOR FILLING CISTERNS,** according to claim 13, **characterised in that** the device is defined on the basis of a body in the form of a washer constituting the actual closing element itself (46') that washer being coupled and guided in a rod (43) centrally fixed in a central piece (47') with passage holes (52), that central piece (47') being embedded within the inlet pipe (48), said central piece constituting the passage and closing element.

16. **IMPROVED FAUCET FOR FILLING CISTERNS**, according to claim 1, **characterised in that** it includes a filter (53) embedded in an initial section of the inlet pipe, said filter comprising a short initial portion (55) of greater diameter whereby the filter is embedded and a grooved cylindrical portion (56) of lesser diameter which ends in a closed bottom (57), from which projects a coaxial manipulating shaft (59); including some internal radial partitions (60) projecting from the grooved surface (56); all this in order to prevent small foreign bodies from blocking the grooves of the cylindrical portion and blocking the filter.

17. **IMPROVED FAUCET FOR FILLING CISTERNS,** according to claim 16, **characterised in that** the filter is embedded inside a tubular threaded pin (54) arranged at the start of the inlet pipe (48).
